# FASCICULE DE BREVET EUROPEEN

(11) **EP 1 397 048 B1**
(45) Date de publication et mention de la délivrance du brevet: **22.03.2006**
(21) Numéro de dépôt: 02748956.6
(22) Date de dépôt: 18.06.2002
(51) Int. Cl.: A22C 13/00, A23P 1/08, A23L 1/317, A23C 19/16, A23P 1/12, A23L 1/0532, A23L 1/0524

(54) **PROCEDE DE PREPARATION DE PRODUITS ALIMENTAIRES ENROBES D'UN MATERIAU A BASE DE PROTEINE ET D'HYDROCOLLOIDE**
VERFAHREN ZUR HERSTELLUNG VON NAHRUNGSMITTTELN MIT EINER BESCHICHTUNG AUF BASIS VON PROTEIN UND HYDROKOLLOID
METHOD FOR PRODUCTION OF FOOD PRODUCTS COATED IN A MATERIAL MADE FROM PROTEIN AND HYDROCOLLOID MATERIALS

(30) Priorité: 22.06.2001 FR 0108274
(43) Date de publication de la demande: 17.03.2004
(73) Titulaire: Sonjal, 56150 Baud (FR)
(72) Inventeur: BOCABEILLE, Gilles, 35630 La Chapelle Chaussée (FR)
(74) Mandataire: Bentz, Jean-Paul
(86) Numéro de dépôt international: PCT/FR2002/002100
(87) Numéro de publication internationale: WO 2003/001919

(56) Documents cités:
- WO-A-00/67582
- WO-A-99/55165
- US-A- 2 802 744

## Description

L'invention se rapporte à un procédé de préparation de produits alimentaires enrobés d'un matériau constitué de protéine végétale et d'hydrocolloïde, ainsi qu'aux produits alimentaires susceptibles d'être obtenus selon ce procédé.

Il est déjà connu du document WO 99/55165 des produits alimentaires, par exemple de type saucisse, dont le contenu, le plus souvent de la chair de viande, est enrobé dans un matériau formant peau, constitué essentiellement de protéine et d'hydrocolloïde

Toutefois, malgré la proportion en protéine, dans le matériau d'enrobage, nettement supérieure à celle de l'hydrocolloïde, le produit alimentaire issu du procédé de ce document ne présente pas une stabilité correcte dans le temps.
Par ailleurs, la trop faible concentration totale en hydrocolloïde ne permet pas de conserver un produit alimentaire issu de ce procédé, présentant une tenue correcte lors de la cuisson, par exemple à la poêle ou au-dessus des braises d'un barbecue.

En effet, si le produit alimentaire n'est pas cuit dans un délai rapide d'environ 2 à 12 heures après sa fabrication, le matériau d'enrobage du produit se décompose rapidement. Il se ramollit autour de la chair, dans la mesure où le flux sodique est trop important dans la chair, et est non tamponné.

La teneur en eau trop importante dans le matériau d'enrobage le rend plus fragile à une bonne tenue quelques jours après sa fabrication.

De plus, malgré sa proportion élevée en protéine totale, le matériau d'enrobage comprend une trop faible quantité de protéines insolubles dans l'eau.

Aussi, il subsiste le besoin de disposer d'un procédé de préparation de produits alimentaires enrobés d'un matériau de garniture et de maintien constitué de protéine végétale et d'hydrocolloïde évitant les inconvénients cités précédemment.

L'invention a donc pour objet un procédé de préparation d'un produit comestible pouvant se présenter sous différentes formes géométriques, comprenant une base constituée de chair animal et/ou de produits laitiers, éventuellement mélangé à des légumes et/ou fruits, ladite base étant recouverte en tout ou partie d'un matériau de garniture et de maintien, ledit matériau comprenant au moins une protéine végétale et au moins un hydrocolloïde, ledit procédé consistant à :
- mélanger la protéine et l'hydrocolloïde dans un milieu aqueux de façon à obtenir le matériau de garniture et de maintien sous une forme pouvant être extrudée,
- à préparer la base,
- à enrober la base préparée avec le matériau de garniture et de maintien,
- puis à effectuer un traitement chimique par une gélification calcique de la base enrobée, dans un bain aqueux comprenant essentiellement un cation divalent,
caractérisé en ce qu'avant de mélanger ensemble la protéine végétale et l'hydrocolloïde, la protéine végétale est tout d'abord dispersée dans de l'eau distillée de façon à en récupérer la phase mouillée insolubilisée, ladite phase insolubilisée étant ensuite dispersée et hydratée dans de l'eau chauffée comprenant déjà l'hydrocolloïde, le mélange final (protéine-hydrocolloïde) dans lequel le rapport protéine/hydrocolloïde est inférieur ou égal à 1, étant ensuite pasteurisé,
en ce qu'on substitue, dans la base préparée, l'acétate de sodium par de l'acétate de calcium,
et en ce que le bain de gélification comprend du méthanol et/ou de l'éthanol et présente un pH acide.

L'invention présente l'avantage, d'une part, du fait de la présence de l'hydrocolloïde, de permettre la gélification instantanée du matériau d'enrobage lorsque ce dernier est mis en contact avec le bain de gélification, et d'autre part, du fait de la présence de protéine végétale, de permettre la coagulation de ce matériau d'enrobage provoquant ainsi sa rétractation simumltanément à celle de la chair lors de la cuisson.

De plus, la présence en quantité suffisante du réseau protéinique insoluble dans l'eau, dans le matériau d'enrobage et de maintien, permet de rentabiliser au maximum la fonctionnalité de toute la protéine présente, en consommant moins de protéine, tout en permettant d'obtenir des produits alimentaires ayant un aspect satiné similaire à celui obtenu avec des boyaux naturels d'origine animal, tels que ceux du mouton.

Enfin, la substitution, dans la base, de l'acétate de sodium par l'acétate de calcium permet, par ailleurs, de tamponner le milieu chimique de la base, qui présente le plus souvent une concentration sodique très élevée du fait de l'ajout de différents sels sodiques connus pour leur effet antioxydant, conservateur ou bactériostatique, aboutissant ainsi à une bonne stabilisation dans le temps du matériau d'enrobage, et, donc au non décollement de la base pendant la cuisson.

L'invention a encore pour objet un produit comestible pouvant se présenter sous différentes formes géométriques, susceptible d'être obtenu selon le procédé défini précédemment.

Ce produit comprend un matériau de garniture et de maintien, et une base constituée de chair animale et/ou de produits laitiers éventuellement mélangée à des légumes et/ou des fruits.

Ce produit se caractérise en ce que ledit matériau comprend une protéine végétale et un hydrocolloïde présent dans un rapport protéine/hydrocolloïde inférieur ou égal à 1, et en ce que dans la base on substitue l'acétate de sodium par de l'acétate de calcium.

Selon un mode préféré de l'invention, le bain de gélification comprend essentiellement de l'acétate de calcium, et le pH acide de ce bain est obtenu par la présence d'au moins un composé choisi parmi l'acide citrique, l'acide lactique, l'acide acétique ou leur mélange.

Le bain de gélification peut comprendre différents additifs choisis parmi les agents antifongiques, les conservateurs, les colorants, les parfums. Egalement, la base peut comprendre différentes additifs choisis parmi les conservateurs, les colorants, les antioxydants, les ferments et leur mélange.

De préférence, le composé acidifiant est présent en une quantité allant de 0,5% à 3% en poids, et plus préférentiellement de 1 à 1,5% en poids par rapport au poids total du bain de gélification. Le méthanol et/ou l'éthanol peut être présent en une quantité allant de 5 à 20%, et de préférence de 10% à 15% en poids par rapport au poids total du bain de gélification.

L'acétate de calcium peut être présent en une quantité allant de 0,10% à 0,6% en poids, et de préférence de 0,25% à 0,4% en poids par rapport au poids total de la base. Il peut, par ailleurs, être présent en une quantité allant 10% à 30% en poids, et de préférence de 20% à 27% en poids par rapport au poids total du bain.

Le mélange (protéine-hydrocolloïde) peut en outre comprendre du phosphate bicalcique en une quantité allant de 0,1% à 0,4% du poids, et de préférence de 0,2% en poids par rapport au poids total du mélange (protéine-hydrocolloïde) final.

La présence de phosphate bicalcique améliore l'obtention du produit comestible enrobé. En effet, le phosphate bicalcique incorporé dans le mélange protéine-hydrocolloïde avant sa pasteurisation, permet, lorsqu'il est mis en contact avec le bain acide, de précipiter l'hydrocolloïde sous forme calcique au sein du produit comestible.

La présence de phosphate bicalcique permet de renforcer, de plus, nettement dans le temps, la qualité visuelle des produits comestibles issus du procédé de l'invention.

La protéine végétale peut être choisie parmi la protéine de gluten, la protéine de pois, la protéine de lupin, la protéine de soja et leur mélange.

L'hydrocolloïde peut être choisi parmi les alginates, les pectates, tels que l'alginate de sodium ou le pectate de sodium et leur mélange.

De préférence, la phase protéinique insolubilisée récupérée est présente en une quantité allant de 20 à 45% du poids, et de préférence de 20 à 35% en poids par rapport au poids total du matériau de garniture et de maintien.

L'invention va maintenant être décrite à l'aide des exemples de réalisation qui suivent, qui sont donnés uniquement à titre d'illustration, et qui sont non limitatifs.

La préparation du mélange (protéine -hydrocolloïde) est réalisée selon le mode suivant :

### 1 - Préparation de la protéine végétale

On mélange quelques minutes (environ 2 à 3 minutes) à température ambiante (environ 20-50°C) la protéine végétale, mise sous forme de poudre, avec de l'eau distillée jusqu'à obtenir la parfaite dissolution de la protéine, selon, par exemple, les proportions suivantes :

| | |
|---|---|
| La protéine de gluten | 160g / 1000g d'eau |
| Protéine de pois | 200g /1000g d'eau |
| ou protéine de lupin | 350g / 1000g d'eau |
| ou protéine de soja | 28g / 1000g d'eau |

On laisse ensuite reposer environ 30 minutes ce mélange jusqu'à l'obtention d'un milieu multiphase.

On récupère à la surface du mélange décanté, la protéine végétale sous forme pâteuse. Cette pâte est essentiellement constituée d'un réseau protéinique dissous. Cette pâte récupérée est ensuite concentrée, selon des techniques connues, pour obtenir une protéine insoluble concentrée à environ 33%.

### 2 - Préparation de l'hydrocolloïde

On mélange rapidement l'hydrocolloïde avec de l'eau chauffée à environ 75°C, pendant environ 1 minute, selon par exemple les proportions suivantes :
Alginate de sodium 50g / 830g d'eau
ou pectate de sodium 30g / 850g d'eau,
et on y incorpore la pâte de protéine végétale concentrée.
L'ensemble est ensuite chauffé à environ 75°C pendant environ 15 minutes pour être pasteurisé.

Le mélange obtenu (protéine végétale-hydrocolloïde) refroidi, disponible sous forme pâteuse, est conditionné en poches stériles pouvant être stockées avant utilisation.

Le mélange obtenu peut être choisi parmi les quelques exemples suivants :

### a) exemple 1

- Alginate 5%
- Protéine de gluten 3,94%
- Eau 91,06%

### b) exemple 2

- Pectate 3,1%
- Protéine de gluten 3,00%
- Eau 93,90%

### c) exemple 3

- Alginate 3%
- Protéine de pois 2,8%
- Eau 94,2%

### 3 - Préparation de la base

La base, constituée de chair de viande ou de poisson, ou de produits laitiers, éventuellement additionnée de légumes et/ou de fruits, à laquelle des composés lipidiques peuvent être présents, comprend par ailleurs de nombreux sels ou des sels d'acides généralement complexés avec l'ion sodium notamment destinés à la conservation de la base.

Parmi ces sels on peut, par exemple, trouver l'ascorbate de sodium, des nitrites de sodium, des nitrates de sodium, de l'acétate de sodium, du lactate de sodium, l'érythorbate de sodium, le colorant carminique sur un support à base de soude, ainsi que le chlorure de sodium qui à lui seul est déjà présent à raison d'environ 1,7 à 2% du poids total de la base enrobée.

Par conséquent, la « pression sodique » de la base est assez importante.

Aussi, le remplacement de l'acétate de sodium par l'acétate de calcium dans la base permet de tamponner la base déjà riche en ion sodium et, par conséquent d'annuler cette « pression sodique ».

L'acétate de calcium est de préférence présent dans la base dans une proportion allant de 0,25 à 0,4% en poids par rapport au poids total de la base, et par rapport à la concentration en sels dans la base.

### 4 - Préparation du bain de gélification

On dissout à température ambiante (20-25°C) les composés suivants :
- Eau 890g
- Acétate de calcium 270g - agent saturant du calcium libre.
- Acide citrique 10g - acidifiant pour obtenir un pH final compris entre environ 3 et 4,5.
- Alcool Brandy 100g - effet tenseur sur le matériau d'enrobage et effet anti-bactérien pour l'ensemble du procédé de préparation.
- Sorbate de potassium 10g - effet antifongique dans un milieu à pH acide.

L'acétate de calcium est solubilisé jusqu'à saturation.

Dans le bain de gélification, on utilise de l'acétate de calcium beaucoup plus soluble que le lactate de calcium habituellement utilisé dans l'art antérieur.

En effet, le lactate de calcium peut être solubilisé à 27% en poids par rapport au poids total du bain, alors que le lactate de calcium ne l'est qu'à 5,5%.

Par conséquent, la concentration calcique dans le bain est nettement plus importante.

De plus, on ajoute un agent acidifiant dans le bain pour augmenter la solubilisation de l'acétate de calcium.

La présence d'éthanol et/ou de méthanol dans le bain permet , à la fois, de tendre le film de matériau d'enrobage et de maintien sur la base, et, de stabiliser microbiologiquement le bain sur une longue durée de travail.

La mise en oeuvre du procédé de préparation de produit comestible aux formes géométriques différentes, par exemple de type saucisse, utilise un procédé de coextrusion classique.

La base, enrobée du matériau de garniture et de maintien, est trempée dans le bain de gélification où se produisent simultanément deux gélifications différentes et complémentaires :
- la première, par trempage avec les ions calcium libres présents en abondance dans le bain ; dès immersion, un film extérieur d'un complexe (d'hydrocolloïde -Ca⁺⁺) se forme à la surface extérieure du mélange enrobant la base et,
- la seconde, un peu moins rapide par libération des ions calcium présents dans la base, du fait du pH acide du bain.

La gélification de la base enrobée est obtenue grâce à la présence de l'hydrocolloïde qui se durcit instantanément au contact du bain calcique. En outre, cette gélification est thermostable.

A la sortie du bain, la base enrobée du matériau de garniture et de maintien passe dans un dispositif destiné à pincer progressivement l'ensemble de façon à l'aplatir.
A ce stade, la gélification acide, encore active est un avantage important, car elle crée une soudure entre les deux couches de matériau d'enrobage, permettant d'obtenir des portions parfaitement fermées à leurs extrémités.

Le produit obtenu à l'issue du procédé de l'invention présente un aspect satiné conforme à l'aspect de produits équivalents poussés sous boyau naturel, par exemple ceux du mouton.

Un tel aspect est obtenu grâce à la présence du réseau protéique insoluble de la protéine végétale. La protéine végétale présente en outre l'intérêt de coaguler au contact du bain calcique, et par conséquent de se rétracter sur la base enrobée lors de la cuisson, évitant ainsi le décollement du matériau d'enrobage de la base.

## Revendications

1. Procédé de préparation d'un produit comestible pouvant se présenter sous différentes formes géométriques comprenant une base constituée de chair animal et/ou de produits laitier, éventuellement mélangé à des légumes et/ou fruits, ladite base étant recouverte en tout ou partie d'un matériau de garniture et de maintien, ledit matériau comprenant au moins une protéine végétale et au moins un hydrocolloïde, ledit procédé consistant à :
- mélanger la protéine et l'hydrocolloïde dans un milieu aqueux de façon à obtenir le matériau de garniture et de maintien sous une forme pouvant être extrudée,
- à préparer la base,
- à enrober la base préparée avec le matériau de garniture et de maintien,
- puis à effectuer un traitement chimique par une gélification calcique de la base enrobée, dans un bain aqueux comprenant essentiellement un cation divalent,
**caractérisé en ce qu'**avant de mélanger ensemble la protéine végétale et l'hydrocolloïde, la protéine végétale est tout d'abord dispersée dans de l'eau distillée de façon à en récupérer la phase mouillée insolubilisée, ladite phase insolubilisée étant ensuite dispersée et hydratée dans de l'eau chauffé, comprenant déjà l'hydrocolloïde, le mélange final (protéine-hydrocolloïde) dans lequel le rapport protéine/hydrocolloïde est inférieur ou égal à 1, étant ensuite pasteurisé,
**en ce qu'**on substitue, dans la base préparée, l'acétate de sodium par de l'acétate de calcium,
et **en ce que** le bain de gélification comprend du méthanol et/ou de l'éthanol et présente un pH acide.

2. Procédé selon la revendication 1, car 1, **caractérisé en ce que** le bain de gélification comprend essentiellement de l'acétate de calcium.

3. Procédé selon la revendication 1, **caractérisé en ce que** le pH acide du bain est obtenu par la présence d'au moins un composant acidifiant choisi parmi l'acide citrique, l'acide lactique, l'acide acétique ou leur mélange.

4. Procédé selon la revendication 3, **caractérisé en ce que** le composé acidifiant est présent en une quantité allant de 0,5 à 3% en poids, et de préférence de 1 à 1,5% en poids par rapport au poids total du bain.

5. Procédé selon la revendication 1, **caractérisé en ce que** le méthanol et/ou l'éthanol est présent en une quantité allant de 5 à 20%, et de préférence de 10 à 15% en poids par rapport au poids total du bain.

6. Procédé selon la revendication 1, **caractérisé en ce que** l'acétate de calcium est présent en une quantité allant de 0,1 à 0,6%, et de préférence de 0,25 à 0,4% en poids par rapport au poids total de la base.

7. Procédé selon la revendication 2, **caractérisé en ce que** l'acétate de calcium est présent en une quantité allant de 10% à 30% en poids, et de préférence de 20% à 27% en poids par rapport au poids total du bain.

8. Procédé selon la revendication 1, **caractérisé en ce qu'**on ajoute des phosphates bicalciques dans le mélange (protéine-hydrocolloïde).

9. Procédé selon la revendication 8, **caractérisé en ce que** le phosphate bicalcique est présent en une quantité allant de 0,1% à 0,4% en poids, et de préférence de 0,2% en poids par rapport au poids total du matériau de garniture.

10. Procédé selon la revendication 1, **caractérisé en ce que** la protéine végétale est choisie parmi la protéine de gluten, la protéine de pois, la protéine de lupin, la protéine de soja et leur mélange.

11. Procédé selon la revendication 1, **caractérisé en ce que** l'hydrocolloïde est choisi parmi les alginates, les pectates et leur mélange.

12. Procédé selon la revendication 1, **caractérisé en ce que** la phase protéinique insolubilisée récupérée est présente en une quantité allant de 20 à 45% en poids, et de préférence de 20 à 35% en poids par rapport au poids total du matériau de garniture et de maintien.

13. Produit comestible pouvant se présenter sous différentes formes géométriques, susceptibles d'être obtenu selon le procédé défini selon l'une des revendications 1 à 12, comprenant un matériau de garniture et de maintien, et une base constituée de chair animale et/ou de produits laitiers éventuellement mélangée à des légumes et/ou des fruits, **caractérisé en ce que** ledit matériau comprend une protéine végétale et un hydrocolloïde présent dans un rapport protéine/hydrocolloïde inférieure ou égale à 1 et **en ce que** dans la base, on substitue l'acétate de sodium par de l'acétate de calcium.

14. Produit selon la revendication 13, **caractérisé en ce que** la base comprend de l'acétate de calcium.

15. Produit selon la revendication 14, **caractérisé en ce que** l'acétate de calcium est présent en une quantité allant de 0,1 à 0,6% en poids et de préférence de 0,25 à 0,4% en poids par rapport au poids total de la base.

## Patentansprüche

1. Verfahren zur Herstellung eines Nahrungsmittelprodukts, welches verschiedene geometrische Formen aufweisen kann, mit einer Basis, welche aus Tierfleisch und/oder Milchprodukten, gegebenenfalls gemischt mit Gemüse und/oder Früchten, gebildet ist, wobei die Basis ganz oder teilweise mit einem Verzierungs- und Stabilisierungsmaterial überzogen ist, wobei das Material wenigstens ein pflanzliches Protein und wenigstens ein Hydrokolloid umfasst, welches Verfahren besteht in:
- Mischen des Proteins und des Hydrokolloids in einem wässrigen Milieu um so das Verzierungs- und Stabilisierungsmaterial in einer Form zu gewinnen, die extrudiert werden kann,
- Herstellen der Basis,
- Überziehen der hergestellten Basis mit dem Verzierungs-und Stabilisierungsmaterial,
- dann Durchführen einer chemischen Behandlung der überzogenen Basis mittels einer Kalzium-Gelierung in einem wässrigen Bad, welches im Wesentlichen ein divalentes Kation enthält,
**dadurch gekennzeichnet, dass** vor dem Zusammenmischen des pflanzlichen Proteins und des Hydrokolloids das pflanzliche Protein zunächst in destilliertem Wasser dispergiert wird um so die nicht-gelöste feuchte Phase zurück zu gewinnen, wobei die nicht-gelöste Phase danach in erwärmten Wasser, welches bereits das Hydrokolloid enthält, dispergiert und hydratiert wird, die Endmischung (Protein-Hydrokolloid), in der das Verhältnis Protein/Hydrokolloid kleiner oder gleich 1 ist, danach pasteurisiert wird,
dass in der vorbereiteten Basis Natriumacetat durch Kalziumacetat substituiert wird,
und dass das Gelierungsbad Methanol und/oder Ethanol umfasst und einen sauren pH aufweist.

2. Verfahren nach Anspruch 1,
**dadurch gekennzeichnet, dass** das Gelierungsbad im Wesentlichen Kalziumacetat umfasst.

3. Verfahren nach Anspruch 1,
**dadurch gekennzeichnet, dass** der saure pH des Bads durch das Vorliegen wenigstens einer säurebildenden Komponente, gewählt aus Zitronensäure, Milchsäure, Essigsäure, oder deren Mischung, erhalten wird.

4. Verfahren nach Anspruch 3,
**dadurch gekennzeichnet, dass** die säurebildende Komponente in einer Menge von 0,5 bis 3 Gewichtsprozent, und vorzugsweise von 1 bis 1,5 Gewichtsprozent, in Bezug auf das Gesamtgewicht des Bads vorliegt.

5. Verfahren nach Anspruch 1,
**dadurch gekennzeichnet, dass** Methanol und/oder Ethanol in einer Menge von 5 bis 20 Gewichtsprozent, und vorzugsweise von 10 bis 15 Gewichtsprozent, in Bezug auf das Gesamtgewicht des Bads vorliegt.

6. Verfahren nach Anspruch 1,
**dadurch gekennzeichnet, dass** Kalziumacetat in einer Menge von 0,1 bis 0,6 Gewichtsprozent, und vorzugsweise von 0,25 bis 0,4 Gewichtsprozent, in Bezug auf das Gesamtgewicht der Basis vorliegt.

7. Verfahren nach Anspruch 2,
**dadurch gekennzeichnet, dass** Kalziumacetat in einer Menge von 10 bis 30 Gewichtsprozent, und vorzugsweise von 20 bis 27 Gewichtsprozent, in Bezug auf das Gesamtgewicht des Bads vorliegt.

8. Verfahren nach Anspruch 1,
**dadurch gekennzeichnet, dass** Calciumhydrogenphosphate in die Mischung (Protein-Hydrokolloid) hinzugefügt werden.

9. Verfahren nach Anspruch 8,
**dadurch gekennzeichnet, dass** Calciumhydrogenphosphat in einer Menge von 0,1 bis 0,4 Gewichtsprozent, und vorzugsweise 0,2 Gewichtsprozent, in Bezug auf das Gesamtgewicht des Verzierungsmaterials vorliegt.

10. Verfahren nach Anspruch 1,
**dadurch gekennzeichnet, dass** das pflanzliche Protein aus Glutenprotein, Erbsenprotein, Lupineprotein, Sojaprotein und deren Mischung gewählt ist.

11. Verfahren nach Anspruch 1,
**dadurch gekennzeichnet, dass** das Hydrokolloid aus Alginaten, Pektaten und deren Mischung gewählt ist.

12. Verfahren nach Anspruch 1,
**dadurch gekennzeichnet, dass** die zurück gewonnene nicht-gelöste Proteinphase in einer Menge von 20 bis 45 Gewichtsprozent, und vorzugsweise von 20 bis 35 Gewichtsprozent, in Bezug auf das Gesamtgewicht des Verzierungs- und Stabilisierungsmaterials vorliegt.

13. Nahrungsmittelprodukt, welches verschiedene geometrische Formen aufweisen kann und geeignet ist, durch ein nach einem der Ansprüche 1 bis 12 definiertes Verfahren hergestellt zu werden, mit einem Verzierungs- und Stabilisierungsmaterial und einer Basis, welche aus Tierfleisch und/oder Milchprodukten, gegebenenfalls gemischt mit Gemüse und/oder Früchten, gebildet ist, **dadurch gekennzeichnet, dass** das Material ein pflanzliches Protein und ein Hydrokolloid umfasst, welche in einem Verhältnis Protein/Hydrokolloid von kleiner oder gleich 1 vorliegen und in der Basis Natriumacetat durch Kalziumacetat substituiert ist.

14. Nahrungsmittelprodukt nach Anspruch 13, **dadurch gekennzeichnet, dass** die Basis Kalziumacetat umfasst.

15. Nahrungsmittelprodukt nach Anspruch 14,
**dadurch gekennzeichnet, dass** Kalziumacetat in einer Menge von 0,1 bis 0,6 Gewichtsprozent, und vorzugsweise von 0,25 bis 0,4 Gewichtsprozent, in Bezug auf das Gesamtgewicht der Basis vorliegt.

## Claims

1. Method for producing a comestible product capable of being presented in different geometrical shapes, comprising a base made of animal meat and/or milk products, possibly mixed with vegetables and/or fruits, said base being covered totally or partially with a garnishing and preserving material, said material including at least one vegetal protein and at least one hydrocolloid, said method consisting of:
- mixing the protein and the hydrocolloid in an aqueous medium in such a way as to obtain the garnishing and preserving material under a form able to be extruded,
- preparing the base,
- coating the prepared base with the garnishing and preserving material,
- then carrying out a chemical processing by calcic gelling of the coated base, in an aqueous bath essentially comprising a divalent cation,
**characterised in that** before mixing together the vegetal protein and the hydrocolloid, the vegetal protein is first of all dispersed in distilled water in such a way as to recuperate the insolubilized soaked phase, said insolubilized phase then being dispersed and hydrated in heated water already including the hydrocolloid, the final mixture (protein-hydrocolloid), wherein the protein/hydrocolloid ratio is less than or equal to 1, then being pasteurised,
- **in that**, in the prepared base, sodium acetate is substituted by calcium acetate, and
- **in that** the gelification bath includes methanol and/or ethanol and has an acid pH.

2. Method according to claim 1, **characterised in that** the gelification bath essentially comprises calcium acetate.

3. Method according to claim 1, **characterised in that** the acid pH of the bath is obtained by the presence of at least one acidifying component chosen from among citric acid, lactic acid, acetic acid or a mixture of these.

4. Method according to claim 3, **characterised in that** the acidifying compound is present in a quantity ranging from 0.5 to 3% by weight, and preferably from 1 to 1.5% by weight relative to the total weight of the bath.

5. Method according to claim 1 **characterised in that** the methanol and/or ethanol is present in a quantity ranging from 5 to 20%, and preferably from 10 to 15% by weight relative to the total weight of the bath.

6. Method according to claim 1, **characterised in that** the calcium acetate is present in a quantity ranging from 0.1 to 0.6%, and preferably from 0.25 to 0.4% by weight relative to the total weight of the base.

7. Method according to claim 2, **characterised in that** the calcium acetate is present in a quantity ranging from 10% to 30% by weight, and preferably from 20% to 27% by weight relative to the total weight of the bath.

8. Method according to claim 1, **characterised in that** bi-calcium phosphates are added to the mixture (protein-hydrocolloid).

9. Method according to claim 8, **characterised in that** the bi-calcium phosphate is present in a quantity ranging from 0.1% to 0.4% by weight, and preferably 0.2% by weight relative to the total weight of the garnishing material.

10. Method according to claim 1, **characterised in that** the vegetal protein is chosen from amongst gluten protein, pea protein, lupine protein, soybean protein and their mixture.

11. Method according to claim 1, **characterised in that** the hydrocolloid is chosen from amongst the alginates, the pectates, and their mixture.

12. Method according to claim 1, **characterised in that** the recuperated insolubilized protein phase is present in a quantity ranging from 20 to 45% by weight, and preferably from 20 to 35% by weight relative to the total weight of the garnishing and preserving material.

13. Comestible product able to be formed in different geometrical shapes, able to be obtained according to the described method according to any one of claims 1 to 12, comprising a garnishing and preserving material, and a base constituted of animal meat and/or milk products possibly mixed with vegetables and/or fruit, **characterised in that** said material comprises a vegetal protein and a hydrocolloid present in a protein/hydrocolloid ratio less than or equal to 1 and **in that** in the base, sodium acetate is substituted by calcium acetate.

14. Product according to claim 13, **characterised in that** the base comprises calcium acetate.

15. Product according to claim 14, **characterised in that** the calcium acetate is present in a quantity ranging from 0.1 to 0.6% by weight and preferably from 0.25 to 0.4% by weight relative to the total weight of the base.
